# EUROPÄISCHE PATENTANMELDUNG

(11) **EP 0 561 215 A1**
(43) Veröffentlichungstag der Anmeldung: **22.09.1993**
(21) Anmeldenummer: 93103368.2
(22) Anmeldetag: 03.03.1993
(51) Int. Cl.: C09B 67/22, D06P 3/54, C09B 67/38, C09B 1/50, C09B 29/033

(54) **Blaue Farbstoffmischungen**

(30) Priorität: 20.03.1992 DE 4209109
(71) Anmelder: BASF Aktiengesellschaft, D-67063 Ludwigshafen (DE)
(72) Erfinder: Lange, Arno, Dr., W-6702 Bad Duerkheim (DE); Bach, Volker, Dr., W-6730 Neustadt (DE); Degen, Helmut, W-6710 Frankenthal (DE); Reichelt, Helmut, dr., W-6730 Neustadt (DE); Gruettner-Merten, Sabine, Dr., W-6704 Mutterstadt (DE)

(57) **Zusammenfassung**

Blaue Farbstoffmischungen, enthaltend 30 bis 90 Gew.-%, bezogen auf das Gesamtgewicht der Farbstoffe, eines oder mehrerer Farbstoffe auf Basis von halogenierten 1,5-Diamino-4,8-dihydroxyanthrachinonen sowie 10 bis 70 Gew.-%, bezogen auf das Gesamtgewicht der Farbstoffe, eines oder mehrerer Thiophenazofarbstoffe mit einer Kupplungskomponente aus der Anilinreihe, Farbstoffzubereitungen, enthaltend die neuen Farbstoffmischungen, sowie die Verwendung der neuen Farbstoffmischungen zum Färben oder Bedrucken von Polyester in textiler Form.

## Beschreibung

Die vorliegende Erfindung betrifft neue blaue Farbstoffmischungen, enthaltend 30 bis 90 Gew.-%, bezogen auf das Gesamtgewicht der Farbstoffe, eines oder mehrerer Anthrachinonfarbstoffe der Formel I 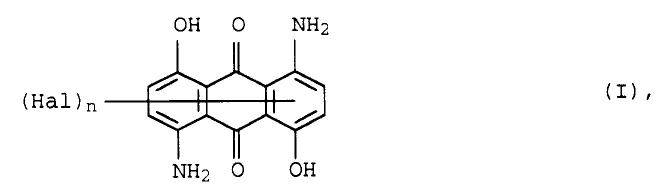
in der
- n: 0,9 bis 2 und
- Hal: Chlor und/oder Brom bedeuten,
sowie 10 bis 70 Gew.-%, bezogen auf das Gesamtgewicht der Farbstoffe, eines oder mehrerer Thiophenazofarbstoffe der Formel II 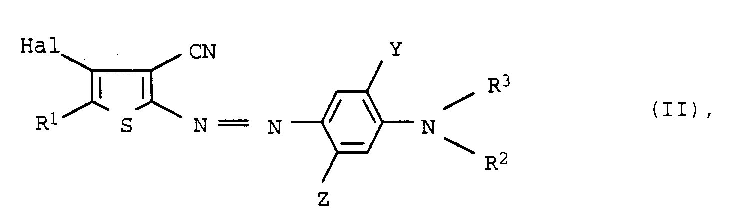
in der
- Hal: Chlor oder Brom
- R¹: Formyl oder Cyano,
- Y: Wasserstoff oder C₁-C₄-Alkoxy,
- Z: C₁-C₄-Alkyl, C₁-C₄-Alkoxy, gegebenenfalls durch Halogen, Cyano, Hydroxy, C₁-C₄-Alkoxy oder C₁-C₄-Alkanoyloxy substituiertes C₁-C₈-Alkanoylamino oder C₃-C₄-Alkenoylamino und
- R² und R³: gleich oder verschieden sind und unabhängig voneinander jeweils Wasserstoff oder C₁-C₆-Alkyl, das gegebenenfalls durch Hydroxy, C₁-C₄-Alkoxy oder C₁-C₄-Alkanoyloxy substituiert ist, bedeuten,
Farbstoffzubereitungen, enthaltend die neuen Farbstoffmischungen, sowie die Verwendung der neuen Farbstoffmischungen zum Färben oder Bedrucken von Polyester in textiler Form.

Grundvoraussetzung für einen Dispersionsfarbstoff, der zum Färben von Polyestern verwendet werden soll, ist, daß er über ein gutes Echtheitsprofil sowie über hohe Farbstärke verfügt.

In der Praxis der Polyester-Färbung ist bei der Anwendung einer Trichromie weiterhin das gleichmäßige Ton-in-Ton-Ausziehen der Farbstoffe aus dem Färbebad gefragt. Nur so sind die wirtschaftlichen Schnellfärbeverfahren möglich.

Man unterscheidet zwei Typen von Trichromien, nämlich solche mit Farbstoffen aus der Klasse der Anthrachinone (z.B. C.I. Disperse Yellow 54 (47020) oder C.I. Disperse Yellow 64 (47023), C.I. Disperse Red 60 (60756) und C.I. Disperse Blue 56 (63285)) oder solche mit Farbstoffen aus der Klasse der Azofarbstoffe (z.B. C.I. Disperse Yellow 211, C.I. Disperse Red 167 und C.I. Disperse Blue 79 (11345).

Azofarbstoffe sind in ihrer Klasse kombinierbar. Die Kombinierbarkeit mit Anthrachinonfarbstoffen führt jedoch häufig zu Problemen. So sind z.B. die Anthrachinonfarbstoffe C.I. Disperse Yellow 54 (oder C.I. Disperse Yellow 64) und C.I. Disperse Red 60 schlecht mit einem Azofarbstoff kombinierbar. Man erhält dabei nämlich Färbungen, deren Farbton sich im Verlauf des Färbevorgangs ändert.

Um die Kosten niedrig zu halten und gleichzeitig echte und reproduzierbare Färbungen zu erhalten, ist eine solche Kombinierbarkeit aber gesucht.

Aufgabe der vorliegenden Erfindung war es nun, neue blaue Farbstoffmischungen aus Anthrachinon- und Azofarbstoffen bereitzustellen, die sich zum Färben oder Bedrucken von Polyestern in Trichromien eignen. Dabei sollten die Mischungen gut mit weiteren Azo- und Anthrachinonfarbstoffen kombinierbar sein, d.h. sie sollten insbesondere über ein gleichmäßiges Ton-in-Ton-Ausziehen verfügen, um so Färbungen mit guter Egalität und Reproduzierbarkeit zu gewährleisten.

Demgemäß wurden die eingangs näher bezeichneten blauen Farbstoffmischungen gefunden.

Alle in der obengenannten Formel II auftretenden Alkylgruppen können sowohl geradkettig als auch verzweigt sein.

Wenn die Alkylreste Substituenten tragen, so sind sie in der Regel 1- oder 2-fach substituiert.

Reste Y und Z in Formel II sind z.B. Methoxy, Ethoxy, Propoxy, Isopropoxy, Butoxy, Isobutoxy oder sec-Butoxy.

Reste Z sind, wie auch die Reste R² und R³, weiterhin z.B. Methyl, Ethyl, Propyl, Isopropyl, Butyl, Isobutyl oder sec-Butyl.

Reste Z sind weiterhin z.B. Acetylamino, Propionylamino, Butyrylamino, Isobutyrylamino, 2-Ethylhexanoylamino, Methoxyacetylamino, Ethoxyacetylamino, 2- oder 3-Methoxypropionylamino, Chloracetylamino, Cyanoacetylamino, Hydroxyacetylamino, Acetyloxyacetylamino, Acroylamino oder Methacroylamino.

Reste R² und R³ sind weiterhin z.B. Pentyl, Isopentyl, Neopentyl, Hexyl, 2-Hydroxyethyl, 2- oder 3-Hydroxypropyl, 2- oder 4-Hydroxybutyl, 2-Methoxyethyl, 2-Ethoxyethyl, 2- oder 3-Methoxypropyl, 2- oder 3-Ethoxypropyl, 2- oder 4-Methoxybutyl, 2- oder 4-Ethoxybutyl, 2-Acetyloxyethyl oder 2- oder 3-Acetyloxypropyl.

Bevorzugt sind solche Farbstoffmischungen, die einen oder mehrere Farbstoffe der Formel I sowie einen oder mehrere Farbstoffe der Formel II, in der
- Hal: Chlor,
- R¹: Formyl oder Cyano,
- Y: Wasserstoff,
- Z: C₁-C₄-Alkyl oder gegebenenfalls durch Methoxy oder Ethoxy substiutiertes Acetylamino oder Propionylamino und
- R² und R³: unabhängig voneinander jeweils C₁-C₄-Alkyl, das gegebenenfalls durch Hydroxy oder C₁-C₄-Alkoxy substituiert ist, bedeuten, enthalten.

Bevorzugt sind weiterhin Farbstoffmischungen, die 40 bis 70 Gew.-%, bezogen auf das Gesamtgewicht der Farbstoffe, eines oder mehrerer Anthrachinonfarbstoffe der Formel I sowie 30 bis 60 bis Gew.-%, bezogen auf das Gesamtgewicht der Farbstoffe, eines oder mehrere Thiophenazofarbstoffe der Formel II enthalten.

Besonders bevorzugt sind Farbstoffmischungen, die 55 bis 65 Gew.-%, bezogen auf das Gesamtgewicht der Farbstoffe, eines oder mehrerer Anthrachinonfarbstoffe der Formel I sowie 35 bis 45 Gew.-%, bezogen auf das Gesamtgewicht der Farbstoffe, eines oder mehrerer Thiophenazofarbstoffe der Formel II enthalten.

Von besonderer Bedeutung sind Farbstoffmischungen, die einen oder mehrere Anthrachinonfarbstoffe der Formel I und einen oder zwei Thiophenazofarbstoffe der Formel II enthalten.

Bei den Farbstoffen der Formel I und II handelt es sich im allgemeinen um bekannte Farbstoffe. Farbstoffe der Formel I werden in der Regel als Mischungen angewandt und sind z.B. als C.I. Disperse Blue 56 (62 285) bekannt und handelsüblich. Sie sind z.B. in der DE-A-1 644 661 beschrieben. Farbstoffe der Formel II sind z.B. aus der EP-A-201 896 bekannt.

Mischungen von Farbstoffen der Formel II mit Farbstoffen auf Basis von Anthrachinon-2,3-dicarbonsäureimiden sind in der älteren europäischen Patentanmeldung Nr. 92 115 621.2 beschrieben.

Die Herstellung der erfindungsgemäßen Farbstoffmischungen erfolgt auf an sich bekanntem Weg, z.B. durch Mischen der jeweiligen Partner im genannten Gewichtsverhältnis. Gegebenenfalls können den neuen Mischungen weitere Komponenten, z.B. Dispergiermittel, wie Ligninsulfonate oder Sulfonierungsprodukte des Reaktionsprodukts von Formaldehyd mit Aromaten, oder andere Hilfsstoffe, zugesetzt werden. Es ist auch möglich, bereits fertige Farbstoffpräparationen der jeweiligen Partner oder fertige Farbstoffpräparationen mit reinen Farbstoffen abzumischen.

Demgemäß betrifft die vorliegende Erfindung weiterhin Farbstoffzubereitungen, enthaltend 15 bis 60 Gew.-%, bezogen auf das Gewicht der Farbstoffzubereitung, einer eingangs näher bezeichneten blauen Farbstoffmischung sowie 40 bis 85 Gew.-%, bezogen auf das Gewicht der Farbstoffpräparation, Dispergiermittel.

Die neuen Farbstoffmischungen eignen sich zum Färben oder Bedrucken von Polyester in textiler Form, beispielsweise von Fasern, Geweben oder Mischgeweben von Polyestern mit Baumwolle, Wolle, Celluloseacetat oder Triacetat. Man erhält Ausfärbungen oder Drucke in blauem Farbton. Die Färbe- und Druckverfahren sind an sich bekannt. Nähere Einzelheiten können auch den Beispielen entnommen werden.

Überraschend ist, daß die erfindungsgemäßen Farbstoffmischungen sowohl in Kombination mit Azofarbstoffen als auch mit Anthrachinonfarbstoffen oder Chinophthalonfarbstoffen Ton-in-Ton aufziehen. Die neuen Farbstoffmischungen weisen weiterhin das günstige Echtheitsprofil sowie das vorteilhafte färberische Verhalten der Anthrachinonfarbstoffe auf, wobei insbesondere die Lichtechtheit sowie die Reduktionsstabilität zu nennen sind. Gegenüber der reinen Anthrachinonfarbstoffen zeichnen sich die neuen Farbstoffmischungen durch eine höhere Ergiebigkeit sowie durch ein besseres Aufbauvermögen aus.

Die folgenden Beispiele sollen die Erfindung näher erläutern.

### Färbevorschrift

10 g Polyestergewebe werden bei einer Temperatur von 50°C in 200 ml einer Färbeflotte gegeben, die 1 Gew.-%, bezogen auf das Polyestergewebe, einer Farbstoffpräparation enthält und deren pH-Wert mittels Essigsäure auf 4,5 eingestellt ist. Man behandelt 5 Minuten bei 50°C, steigert dann die Temperatur der Flotte innerhalb von 30 Minuten auf 130°C, hält 60 Minuten bei dieser Temperatur und läßt dann innerhalb von 20 Minuten auf 60°C abkühlen.

Danach wird das ausgefärbte Polyestergewebe reduktiv gereinigt, indem man es 15 Minuten in 200 ml einer Flotte, die 5 ml/l 32 gew.-%ige Natronlauge, 3 g/l Natriumdithionit und 1 g/l eines Anlagerungsproduktes von 48 mol Ethylenoxid an 1 mol Ricinusöl enthält, bei 65°C behandelt. Schließlich wird das Gewebe gespült, mit verdünnter Essigsäure neutralisiert, nochmals gespült und getrocknet.

Die obengenannte Farbstoffpräparation enthielt jeweils 40 Gew.-% an Farbstoffmischung sowie 60 Gew.-% eines Dispergiermittels auf Basis von Ligninsulfonat, jeweils bezogen auf das Gewicht der Präparation.

Die Farbstoffmischung setzte sich dabei wie in der folgenden Tabelle angegeben zusammen, wobei folgende Farbstoffe verwendet wurden.
Farbstoff 1: C.I. Disperse Blue 56(62 285)
Farbstoff 2: 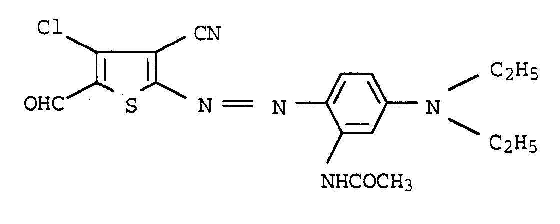
Farbstoff 3:

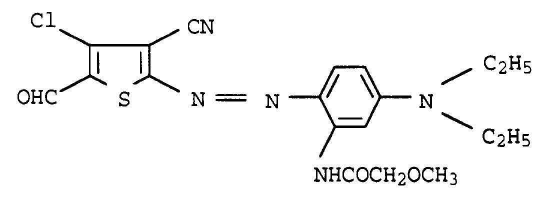

| Bsp. Nr. | Farbstoff Nr. [Gew.-%, bezogen auf die Farbstoffmischung] | | |
|---|---|---|---|
| | 1 | 2 | 3 |
| 1 | 90 | 10 | 0 |
| 2 | 70 | 30 | 0 |
| 3 | 50 | 50 | 0 |
| 4 | 30 | 70 | 0 |
| 5 | 90 | 0 | 10 |
| 6 | 70 | 0 | 30 |
| 7 | 50 | 0 | 50 |
| 8 | 30 | 0 | 70 |
| 9 | 90 | 5 | 5 |
| 10 | 70 | 20 | 10 |
| 11 | 50 | 20 | 30 |
| 12 | 30 | 35 | 35 |
| 13 | 60 | 40 | 0 |
| 14 | 60 | 20 | 20 |
| 15 | 60 | 0 | 40 |

Man erhielt jeweils klare blaue Färbungen.

## Patentansprüche

1. Blaue Farbstoffmischungen, enthaltend 30 bis 90 Gew.-%, bezogen auf das Gesamtgewicht der Farbstoffe, eines oder mehrerer Anthrachinonfarbstoffe der Formel I 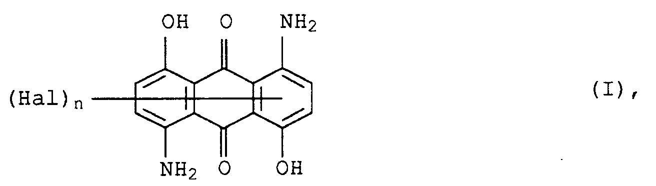 in der
n 0,9 bis 2 und
Hal Chlor und/oder Brom bedeuten,
sowie 10 bis 70 Gew.-%, bezogen auf das Gesamtgewicht der Farbstoffe, eines oder mehrerer Thiophenazofarbstoffe der Formel II 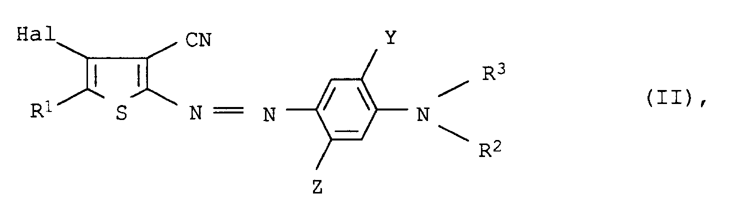 in der
Hal Chlor oder Brom
R¹ Formyl oder Cyano,
Y Wasserstoff oder C₁-C₄-Alkoxy,
Z C₁-C₄-Alkyl, C₁-C₄-Alkoxy, gegebenenfalls durch Halogen, Cyano, Hydroxy, C₁-C₄-Alkoxy oder C₁-C₄-Alkanoyloxy substituiertes C₁-C₈-Alkanoylamino oder C₃-C₄-Alkenoylamino und
R² und R³ gleich oder verschieden sind und unabhängig voneinander jeweils Wasserstoff oder C₁-C₆-Alkyl, das gegebenenfalls durch Hydroxy, C₁-C₄-Alkoxy oder C₁-C₄-Alkanoyloxy substituiert ist, bedeuten.

2. Blaue Farbstoffmischungen nach Anspruch 1, enthaltend 40 bis 70 Gew.-%, bezogen auf das Gesamtgewicht der Farbstoffe, eines oder mehrerer Anthrachinonfarbstoffe der Formel I sowie 30 bis 60 Gew.-%, bezogen auf das Gesamtgewicht der Farbstoffe, eines oder mehrerer Thiophenazofarbstoffe der Formel II.

3. Farbstoffzubereitungen, enthaltend 15 bis 60 Gew.-%, bezogen auf das Gewicht der Farbstoffzubereitung, einer blauen Farbstoffmischung gemäß Anspruch 1 sowie 40 bis 85 Gew.-%, bezogen auf das Gewicht der Farbstoffzubereitung, Dispergiermittel.

4. Verwendung der blauen Farbstoffmischungen gemäß Anspruch 1 zum Färben oder Bedrucken von Polyester in textiler Form.
